# EUROPÄISCHE PATENTSCHRIFT

(11) **EP 1 065 124 B1**
(45) Veröffentlichungstag und Bekanntmachung des Hinweises auf die Patenterteilung: **24.07.2002**
(21) Anmeldenummer: 00110349.8
(22) Anmeldetag: 15.05.2000
(51) Int. Cl.: B61F 5/30

(54) **Federbock für 2-achsige Eisenbahngüterwagen**
Spring bracket for two axle freight car
Support de ressort pour wagon à marchandises à deux essieux

(30) Priorität: 12.06.1999 DE 19926880
(43) Veröffentlichungstag der Anmeldung: 03.01.2001
(73) Patentinhaber: ALSTOM LHB GmbH, 38239 Salzgitter (DE)
(72) Erfinder: Asche, Günter, 38268 Lengede (DE); Beier, Günter, Dipl.-Ing., 38259 Salzgitter (DE); Hahne, Jochen, Dipl.-Ing., 38124 Braunschweig (DE)

(56) Entgegenhaltungen:
- DE-A- 4 119 112
- DE-C- 267 817
- DE-C- 824 647
- DE-C- 942 930
- FR-A- 2 401 049

## Beschreibung

Die Erfindung betrifft einen Federbock für die Aufhängung von Federn von 2-achsigen Eisenbahngüterwagen entsprechend dem Oberbegriff des Anspruchs 1.

Derartige Federböcke sind am Untergestell der Güterwagen angeordnet und bestehen im wesentlichen aus einem Auge zur Aufnahme des Befestigungsbolzens der Federn und zwei seitlichen Streben, nämlich einer Druck- und einer Zugstrebe. Im Fahrbetrieb unterliegen diese Federböcke mit ihren Verbindungselementen besonderen Beanspruchungen durch die auftretenden Fahrzeugschwingungen. Bekannt sind Federböcke, die aus Walzprofil-Abschnitten hergestellt sind. Solch ein Federbock ist in der DE-PS 824 647 beschrieben. Der Tragkörper wird hierbei aus einem längs geschlitzten und verwundenen Flacheisen gebildet, das mit dem als getrenntes Teil ausgeführten Lagerauge durch Schweißung verbunden ist. Solche Ausführungen sind aufwendig herstellbar und in der Anwendung schwingungsanfällig.

In der DE-PS 267 817 ist ein Federbock beschrieben, der vollständig aus einem massiven Gußstück besteht. Die Anordnung des Lagerauges am Ende des Federbockes erfolgt dabei in einem verhältnismäßig großem Abstand von der Mittellinie desselben. Diese Lösung ist für die Praxis zu schwer und auch schwingungsanfällig.

Es sind weiterhin Federbockkonstruktionen in geschweißter Ausführung bekannt, die im wesentlichen aus einem aus zwei gepreßten Hälften zusammengefügten Tragkörper bestehen, der im unteren Bereich ein Lagerauge zur Aufnahme einer Buchse aufweist. Die Buchse wird von außen beidseitig durch eine horizontale Y- bzw. V-Schweißnaht mit dem Tragkörper verbunden. Auf Grund der vorhandenen Fahrzeugschwingungen kann es aber bereits nach kurzer Zeit im Bereich der oberen Schweißnaht und zwar in der Innenwandung des Tragkörpers zu Rißbildungen kommen. Zur Vermeidung dieser Rißbildung hat man die Buchse geteilt ausgeführt und sowohl von innen als auch von außen mit dem Tragkörper durch Schweißung verbunden. Als nachteilig hat sich hierbei eine fehlende Verbindung zwischen den beiden Buchsenhälften herausgestellt, die zu einer gewissen Labilität in diesem Bereich geführt hat. Rißbildungen konnten nicht vermieden werden.

Der Erfindung liegt die Aufgabe zugrunde, durch eine neue konstruktive Lösung einen Federbock zu schaffen, der auftretenden Schwingungen besser widerstehen kann.

Diese Aufgabe wird gemäß dem kennzeichnenden Teil des Anspruches 1 gelöst. Zweckmäßige Ausgestaltungen des Gegenstandes der Erfindung sind in den Unteransprüchen angegeben.

Durch die erfindungsgemäße Lösung werden die membranartig wirkenden Seitenwangen vor auftretenden Fahrzeugschwingungen geschützt und Dauerbrüche, insbesondere im Übergangsbereich zwischen Seitenwangen und Lagerauge, vermieden.

Nachfolgend wird die Erfindung in einem Ausführungsbeispiel beschrieben. Die dem Ausführungsbeispiel zugehörigen Zeichnungen zeigen in
- Fig. 1: einen Schnitt durch eine Seitenansicht eines Federbockes;
- Fig. 2: eine Ansicht X-X nach Fig. 1;
- Fig. 3: einen Schnitt durch eine Seitenansicht eines zweiten Ausführungsbeispiels der Erfindung und
- Fig. 4: eine Ansicht X-X nach Fig. 3.

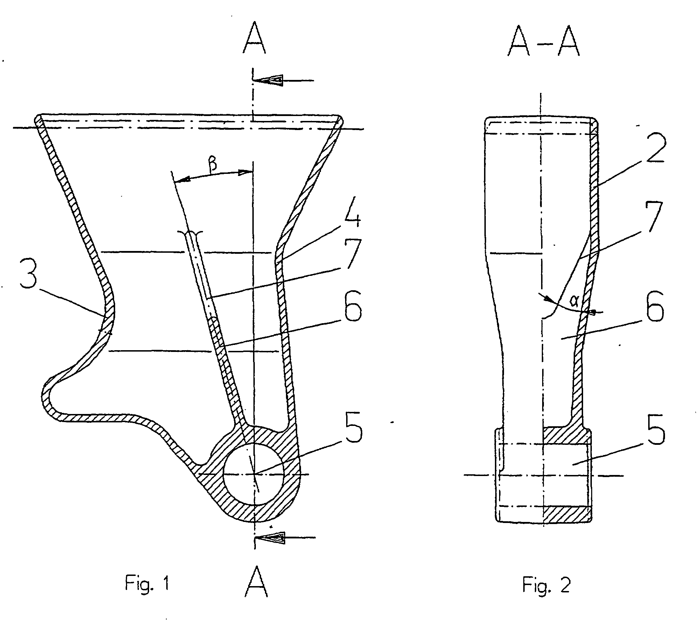

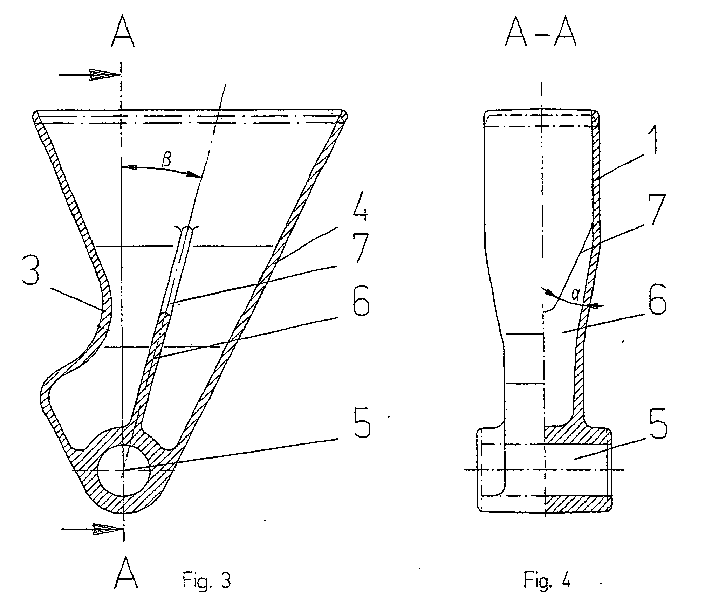

In den Fig. 1 bis 4 sind zwei verschiedene Federböcke dargestellt, die sich ausgehend von den konstruktiven Bedingungen nur in ihrer Geometrie unterscheiden. Der Federbock besteht im wesentlichen aus einem Tragkörper, der zwei Seitenwangen 1, 2 ,eine vordere und eine hintere Wange 3, 4 und eine Verbindungsrippe 6 sowie an seinem unteren, geschlossenen Ende ein Lagerauge 5 aufweist und ist als ein hohles Gußstück ausgebildet.
Die Verbindungsrippe 6 ist zur Verstärkung des Schutzes gegen Schwingungsschäden zwischen den Seitenwangen 1 und 2 angeordnet. Dabei verbindet sie beide Seitenwangen 1 und 2 unmittelbar oberhalb des Lagerauges 5 bis in eine Höhe von ca. der Hälfte der Länge des Federbockes. Von dort läuft die innere Kante 7 der Verbindungsrippe 6 in einem Radius v-förmig mit einem Winkel α von ca. 25° zur Vertikalen zu den Seitenwangen 1 und 2. Die Verbindungsrippe 6 ist außerdem gegenüber der Vertikalen um einen Winkel β von ca. 15° geneigt angeordnet. In Fig. 1 erfolgt die Neigung zur vorderen Wange 3, während in Fig. 3 die Neigung zur hinteren Wange 4 dargestellt ist.

### Bezugszeichenliste

- 1: Seitenwange
- 2: Seitenwange
- 3: Wange
- 4: Wange
- 5: Lagerauge
- 6: Verbindungsrippe
- 7: Kante
- α: Winkel
- β: Winkel

## Patentansprüche

1. Federbock für die Aufhängung von Federn für 2-achsige Eisenbahngüterwagen, bestehend aus einem Tragkörper und einem an seinem unteren Ende angeordneten Lagerauge zur Aufnahme eines Befestigungsbolzens der Federn, **dadurch gekennzeichnet, daß** der Tragkörper als ein hohler, unten geschlossener Gußkörper ausgebildet ist und aus zwei Seitenwangen (1, 2) und aus einer vorderen und einer hinteren Wange (3, 4) besteht, wobei die Seitenwangen (1, 2) durch eine Verbindungsrippe (6) miteinander verbunden sind.

2. Federbock nach Anspruch 1, **dadurch gekennzeichnet, daß** sich die Verbindungsrippe (6) von einer Seitenwange (1) bis zur gegenüberliegenden Seitenwange (2) von oberhalb des Lagerauges (5) bis in eine Höhe von ca. der Hälfte der Länge des Federbockes erstreckt und von dort die obere innere Kante (7) der Verbindungsrippe (6) in einem Radius v-förmig mit einem Winkel α von ca. 25° zur Vertikalen zu den Seitenwangen (1, 2) ausläuft.

3. Federbock nach Anspruch 1 oder 2, **dadurch gekennzeichnet, daß** die Verbindungsrippe (6) zur vorderen Wange (3) oder zur hinteren Wange (4) einen Winkel β von ca. 15° zur Vertikalen aufweist.

## Claims

1. Spring suspension bracket for suspending springs for two-axle railway goods wagons, consisting of a bracket body and a bearing bore arranged at its lower end to receive a fastening pin of the springs, **characterised in that** the bracket body is embodied as a hollow casting closed at the bottom and consists of two side cheeks (1, 2) and of a front and a rear cheek (3, 4), the side cheeks (1, 2) being joined to one another by a connecting rib (6).

2. Spring suspension bracket according to claim 1, **characterised in that** the connecting rib (6) extends from one side cheek (1) to the opposite side cheek (2) from above the bearing bore (5) to a height of approximately half the length of the spring suspension bracket and from there the upper inner edge (7) of the connecting rib (6) runs out in a radius with a V-shape to the side cheeks (1, 2) with an angle α of approximately 25° to the vertical.

3. Spring suspension bracket according to claim 1 or 2, **characterised in that** the connecting rib (6) to the front cheek (3) or to the rear cheek (4) exhibits an angle β of approximately 15° to the vertical.

## Revendications

1. Support de ressort pour la suspension de ressorts pour des wagons de marchandises à 2 essieux, composé d'un corps de support et d'un oeil de montage disposé à son extrémité inférieure pour recevoir un axe de fixation des ressorts, **caractérisé en ce que** le corps de support est conçu comme un corps en fonte creux, fermé en bas, et se compose de deux faces latérales (1, 2) et de faces avant et arrière (3, 4), les faces latérales (1, 2) étant reliées entre elles par une nervure de liaison (6).

2. Support de ressort selon la revendication 1, **caractérisé en ce que** la nervure de liaison (6) s'étend d'une face latérale (1) à la face latérale opposée (2) en partant au-dessus de l'oeil de montage (5) pour atteindre une hauteur environ égale à la moitié de la longueur du support de ressort et, de là, le bord intérieur supérieur (7) de ladite nervure de liaison (6) s'étend en direction des faces latérales (1, 2) suivant un certain rayon, en formant un V et un angle α d'environ 25° par rapport à la verticale.

3. Support de ressort selon la revendication 1 ou 2, **caractérisé en ce que** la nervure de liaison (6) présente, en direction de la face avant (3) ou de la face arrière (4), un angle β d'environ 15° par rapport à la verticale.
